(19) Europäisches Patentamt / European Patent Office / Office européen des brevets

(11) **EP 2 317 689 B1**

(12) **EUROPEAN PATENT SPECIFICATION**

(45) Date of publication and mention of the grant of the patent:
**15.08.2018 Bulletin 2018/33**

(51) Int Cl.:
*H04L 9/00* (2006.01)     *H04L 9/08* (2006.01)
*G06F 21/62* (2013.01)

(21) Application number: **10175467.9**

(22) Date of filing: **06.09.2010**

(54) **Cryptographic system for performing secure computations and signal processing directly on encrypted data in untrusted environments**

Kryptographisches System zur Durchführung sicherer Berechnungen und Signalverarbeitung direkt auf verschlüsselten Daten in unsicheren Umgebungen

Système cryptographique pour effectuer des calculs sécurisés et traitement de signal directement sur des données cryptées dans des environnements douteux

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **04.09.2009 US 240177 P**
**04.09.2009 US 240179 P**
**04.09.2009 US 240181 P**

(43) Date of publication of application:
**04.05.2011 Bulletin 2011/18**

(73) Proprietor: **Gradiant-Centro Tecnoloxico de Telecomunicacións de Galicia**
**36310 Vigo (ES)**

(72) Inventors:
• **Troncoso Pastoriza, Juan Ramon**
**36201 Vigo (ES)**
• **Comesaña Alfaro, Pedro**
**36331 Coruxo, Vigo (ES)**
• **Pérez González, Fernando**
**36211 Vigo (ES)**

(74) Representative: **ZBM Patents - Zea, Barlocci & Markvardsen**
**Plaza Catalunya, 1**
**08002 Barcelona (ES)**

(56) References cited:
• **DANNY BICKSON ET AL: "Peer-to-Peer Secure Multi-party Numerical Computation", PEER-TO-PEER COMPUTING , 2008. P2P '08. EIGHTH INTERNATIONAL CONFERENCE ON, IEEE, PISCATAWAY, NJ, USA, 8 September 2008 (2008-09-08), pages 257-266, XP031322348, ISBN: 978-0-7695-3318-6**
• **KOBBI NISSIM ET AL: "Communication Efficient Secure Linear Algebra", 4 March 2006 (2006-03-04), THEORY OF CRYPTOGRAPHY LECTURE NOTES IN COMPUTER SCIENCE;;LNCS, SPRINGER, BERLIN, DE, PAGE(S) 522 - 541, XP047029485, ISBN: 978-3-540-32731-8 * the whole document ***
• **Craig Gentry: "Fully Homomorphic Encryption Using Ideal Lattices", Proceedings of the 41st ACM Symposium on Theory of Computing - STOC 2009, 2 June 2009 (2009-06-02), pages 169-178, XP055030186, Retrieved from the Internet: URL:http://www.cs.cmu.edu/~odonnell/hits09 /gentry-homomorphic-encryption.pdf [retrieved on 2012-06-18]**
• **Marina Blanton: "CERIAS Tech Report 2005-58 EMPIRICAL EVALUATION OF SECURE TWO-PARTY COMPUTATION MODELS", , 19 August 2005 (2005-08-19), XP055073218, Purdue University, West Lafayette Retrieved from the Internet: URL:https://www.cerias.purdue.edu/assets/p df/bibtex_archive/2005-58.pdf [retrieved on 2013-07-26]**

   

- **Juan Ramon Troncoso-Pastoriza ET AL: "Secure Direct and Iterative Protocols for Solving Systems of Linear Equations", , 7 September 2009 (2009-09-07), XP055073231, Vigo 36310, SPAIN Retrieved from the Internet: URL:http://www.gts.tsc.uvigo.es/gpsc/publi cations/wmark/secure_sle_speedws09.pdf [retrieved on 2013-07-26]**

**Description**

**TECHNICAL FIELD**

Disclosed embodiments relate to cryptography methods and systems. Specifically, they relate to cryptosystems for the execution of operations directly on encrypted data.

**BACKGROUND**

In modern society, digital data about individuals can be found relatively easily in the communication networks, especially the Internet. Although the public supports the last decades' advances in digital networks, the sensitive nature of this data motivates the raise of an increasing concern about the public availability of personal data, and the processing performed on it. For instance, in Europe this concern has been reflected in a series of Directives, dealing with the protection of individuals' personal data. Directive 95/46/EC deals with the protection of individuals with regard to the processing of personal data and the free movement of such data, where personal data means any information relating to an identified or identifiable natural person. One of the main ideas of this Directive is that data processing systems must respect the fundamental rights and freedoms, especially the right to privacy. Similar laws and directives regarding informational privacy have been proposed in the US and other developed countries. These include internet privacy, medical privacy, financial privacy, law enforcement privacy, and political privacy.

There are currently numerous methods available to provide security to a database containing data intended to be held private to third parties. This problem is solved by methods of secure authentication. These methods are widely used to protect the security of databases containing medical, financial, and other types of data. An additional level of security can be added by encrypting all the data contained within the secure database and transmitted to and from the secure database during uploading or downloading operations. This is especially useful when data must be transmitted over a potentially unsecure medium such as computer networks. However, even in these increased security systems at some point the encrypted data is decrypted by an authorized user to perform the necessary data analysis tasks. For instance, in the case of medical research the secure clinical data management system containing the encrypted clinical data and physiological time-series corresponding to a particular study, research, or clinical trial requires the authorized researcher to decrypt the data in order to perform the needed mathematical analysis, signal processing, and statistical analysis in order to generate the study results.There are situations where this conventional framework does not meet the security requirements, that is, in order to analyze and process the encrypted data, such data should not be first decrypted (i.e. the data should be kept encrypted at all times). There are situations where data should be completely private even to researchers, clinical administrators, and system administrators. This may be due to purely privacy reasons or due to research considerations. For instance, certain studies may require scientists and researchers to be completely blinded and the hypothesis and analysis methods to be chosen a-priori. In order to accomplish this, methods for performing the typical mathematical operations and computations including statistical analysis techniques, algebraic methods, signal processing methods, and other computation operations directly on the encrypted datasets are needed. Currently, the availability of such secure methods and cryptosystems is limited.

Conventional cryptographic protocols deal with the problem of protecting some private information from an unauthorized third party that otherwise could modify or have access to the information. In the scenario of secure processing, where the privacy must be preserved not only against an unauthorized third party, but also against the parties that process the data, there are no available systems or methods that can be used in real-world scenarios in terms of both computational cost and communication complexity.

Up to now, the efficient protocols presented in the field of signal processing in the encrypted domain have been focused on linear operations, like scalar products, and non-iterative algorithms. Nevertheless, there are many basic algorithms needed for most signal processing applications that are iterative and involve not only scalar products with known values, but also products between two a-priori unknown sequences. The lack of these algorithms would suppose missing a powerful and irreplaceable tool that enables almost any signal processing application and most types of analysis methods. Currently there is no practical fully homomorphic cryptosystem, that is, there is no secure cryptosystem that allows for the homomorphic computation of additions and products without restrictions. There has been a recent contribution by Gentry that presents a cryptosystem based on ideal lattices with bootstrappable decryption, and it has been shown that it achieves a full homomorphism. Nevertheless, the authors of this method concede that making the scheme practical remains an open problem.

At the moment there are no cryptosystemsavailable that are capable of performing computations such as solving systems of linear equations without imposing any restrictions on the matrix coefficients. These cryptosystems are a critical building block needed to develop and implement more complex cryptosystems capable of performing advanced signal processing, computation, and analysis directly on encrypted data.

## SUMMARY

The above and other objects are achieved by means of the accompanying set of claims.

According to one embodiment, the proposed system involves a cryptographic system (i.e. a cryptosystem) for the execution of operations directly on encrypted data, that is, a system designed to address the problem of efficiently processing signals in untrusted environments, where not only the communication channel between parties is unsecure, but also the parties that perform the computation cannot be trusted.

Disclosed embodiments include a cryptographic system implemented in at least one digital computer with one or more processors or hardware such as FPGAs for performing secure computations, analysis, and signal processing directly on encrypted data in untrusted environments. According to a basic embodiment, the proposed cryptographic system comprises: (a) at least one secure protocol for performing matrix multiplications in the encrypted domain, and (b) at least one secure protocol for solving systems of linear equations in the encrypted domain. According to a particular embodiment, and without limitation, the system comprises a plurality of privacy-preserving protocols for solving systems of linear equations (SLE) directly based on homomorphic computation and secret sharing. More specifically, according to a particular embodiment, and without limitation, the system uses a protocol wherein systems of linear equations are solved securely by direct Gaussian elimination using a secure protocol without imposing any restrictions on the matrix coefficients. In an alternative embodiment, the system uses a protocol whereby systems of linear equations are solved securely and iteratively without imposing any restrictions on the matrix coefficients. Alternatively, the according to another embodiment the system uses a secure iterative protocol whereby systems of linear equations and matrix inversions are solved securely and iteratively without imposing any restrictions on the matrix coefficients based on an iterative protocol substantially equivalent to a Newton secure protocol.

## BRIEF DESCRIPTION OF THE DRAWINGS

Disclosed embodiments are illustrated by way of example, and not by way of limitation, in the figures of the accompanying drawings.

**FIG. 1** shows a block diagram to illustrate the cryptographic system according to one embodiment.
**FIG. 2** shows a high level block diagram to illustrate the operation of the cryptographic system.
**FIG. 3** shows a block diagram to illustrate the secure protocol for solving systems of linear equations in the encrypted domain according to one embodiment.
**FIG. 4** shows a block diagram to illustrate the secure protocol for solving systems of linear equations in the encrypted domain according to one embodiment.
**FIG. 5** shows a block diagram to illustrate the secure protocol for solving systems of linear equations in the encrypted domain according to one embodiment.

## DETAILED DESCRIPTION

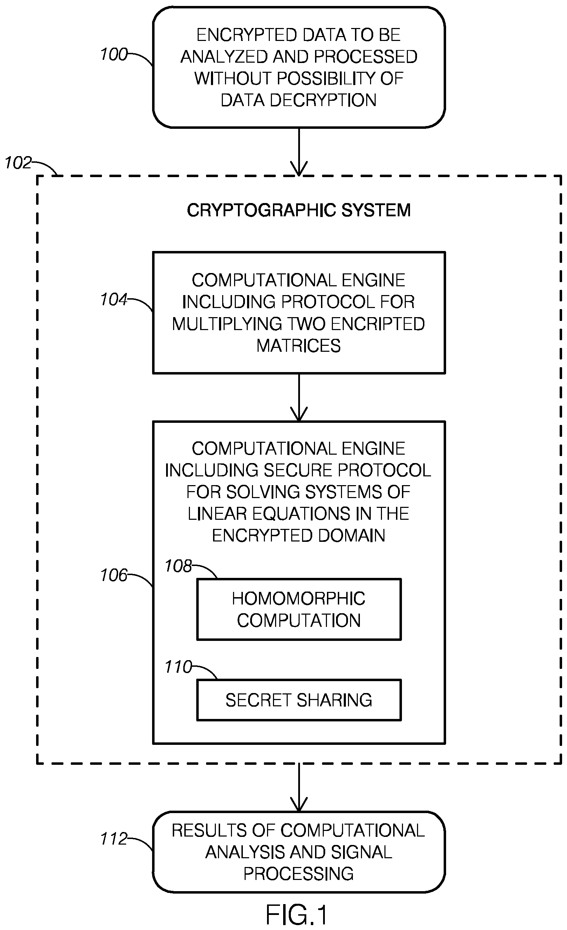

**FIG. 1** shows a block diagram of the cryptographic system **102** according to one embodiment. The embodiments disclosed describe how to realize a cryptographic system **102** for performing secure mathematical computations, signal processing, statistical signal processing, statistics, and data analysis directly on encrypted data **100** in untrusted environments. According to one embodiment, the system involves a cryptosystem **102** for the execution of operations directly on encrypted data **100,** that is, a system designed to address the problem of efficiently processing signals in untrusted environments, where not only the communication channel between parties is unsecure, but also the parties that perform the computation cannot be trusted.

Certain specific details are set forth in the following description and figures to provide a thorough understanding of various embodiments disclosed. Certain well-known details often associated with computing and software technology are not set forth in the following disclosure to avoid unnecessarily obscuring the various disclosed embodiments. Further, those of ordinary skill in the relevant art will understand that they can practice other embodiments without one or more of the details described below. Aspects of the disclosed embodiments may be implemented in the general context of computer-executable instructions, such as program modules, being executed by a computer, computer server, or device containing a processor. Generally, program modules or protocols include routines, programs, objects, components, data structures, etc. that perform particular tasks or implement particular abstract data types. Aspects of the disclosed embodiments may also be practiced in distributed computing environments where tasks are performed by remote processing devices that are linked through a communications network. In a distributed computing environment, program modules may be located in both local and remote storage media including memory storage devices. Those skilled in the art will appreciate that, given the description of the modules comprising the disclosed embodiments provided in this specification, it is a routine matter to provide working systems which will work on a variety of known and commonly available technologies capable of incorporating the featuresdescribed herein.

According to a disclosed embodiment, the cryptographic system **102** is implemented in a digital computer with one or more processors for performing secure computations and signal processing directly on encrypted data **100** in untrusted environments, said cryptographic system **102** comprises: (a) at least one secure protocol for performing matrix multiplications in the encrypted domain **104,** and (b) at least one secure protocol for solving systems of linear equations in the encrypted domain **106.** According to a particular embodiment, and without limitation, the system uses a protocol wherein systems of linear equations are solved securely by direct Gaussian elimination using a secure multiplication protocol to directly generate the results **112** of such secure mathematical computations, signal processing, statistical signal processing, statistics, and data analysis directly on encrypted data **100** in untrusted environments. According to other embodiments the disclosed cryptosystem can be implemented in other hardware besides a digital computer including microcontrollers, DSPs, FPGAs or ASICs, as well as in firmware and software.

The disclosed embodiments of the cryptosystem **102** and associated secure protocols have specific and substantial utility by themselves as systems and methods for cryptography and secure (encrypted) computation but also in a variety of practical applications in diverse fields including secure clinical data management systems, secure web-enabled platforms for collaboration involving privacy data, secure law enforcement systems, secure financial systems, and secure military systems involving transmission of encrypted data to be processed in real-time without decryption.

According to a basic embodiment, the proposed cryptographic system **102** comprises: (a) at least one secure protocol for performing matrix multiplications in the encrypted domain **104,** and (b) at least one secure protocol for solving systems of linear equations in the encrypted domain **106** wherein systems of linear equations are solved securely by direct Gaussian elimination using a secure multiplication protocol based on homomorphic computation **108** and secret sharing **110** without placing any restrictions on the nature of the matrix coefficients (i.e. the matrix coefficients can be real numbers or complex numbers).

By way of example, and not by way of limitation, the embodiments of the disclosed cryptosystem **102** can be used to perform direct analysis and processing in encrypted clinical, financial, national security, military, law enforcement, and political data without the need to decrypt said data prior to performing said analysis and processing. For instance, according to one embodiment the disclosed cryptosystem **102** can be used to realize and implement a secure clinical system wherein all patient data, clinical history, clinical data, physiologic data and time series, biochemical data, and drug therapy data are encrypted at all times for secure transmission, management, and collaboration among researchers and clinicians; and all operations, processing, and statistical analysis performed on such data is conducted on the encrypted domain (i.e. with the data encrypted at all times). A specific particular embodiment of such secure clinical data management and analysis system comprises (a) at least one secure protocol for performing matrix multiplications in the encrypted domain **104,** and (b) at least one secure protocol for solving systems of linear equations in the encrypted domain **106** in addition to the well-known elements comprising clinical management systems. According to a more specific embodiment, such protocol for solving systems of linear equations in said secure clinical data management system is based on a direct implementation of Gaussian elimination using a secure protocol.

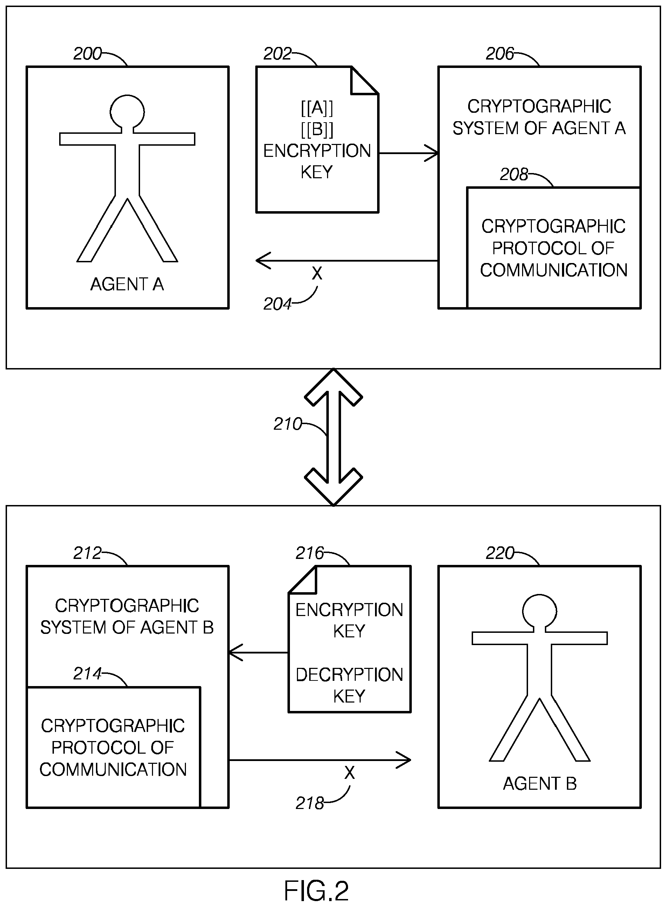

**FIG. 2** shows a high level diagram to illustrate the operation of the cryptographic system according to one embodiment. In the embodiment illustrated, and without limitation, there are two parties $\mathcal{A}$ **200** and $\mathcal{B}$ **220**. The first party owns an encrypted matrix $[\![\boldsymbol{A}]\!]$ and an encrypted vector $[\![\boldsymbol{b}]\!]$, as well as the key for producing encryptions using a homomorphic encryption **202**. The party $\mathcal{B}$ owns both the encryption and decryption key **216** for the same homomorphic encryption. The cryptographic system is used at both ends **206** and **212** in order to privately solve the linear system of equations $\boldsymbol{A} \cdot \boldsymbol{x} = \boldsymbol{b}$. This cryptographic system comprises a protocol of communication between both ends **208** and **214** that defines the operations performed and the format of the interchanged numbers in order to interactively solve the system without disclosing any information. This communication takes place over any communication channel **210** (e.g., a wired or wireless medium or a sole device). After the execution of the protocol, the system outputs the solution $\boldsymbol{x}$ **204** and **218** to the linear system of equations $\boldsymbol{A} \cdot \boldsymbol{x} = \boldsymbol{b}$. It is important to note that both $\mathcal{A}$ and $\mathcal{B}$ can represent a plurality of parties or entities (not necessarily a single entity).

Secure matrix multiplication (linear transformations) and solving linear systems of equations in the encrypted domain are fundamental mathematical building blocks to solve a great variety of problems involving data analysis, time-series analysis, digital signal processing, statistical signal processing, optimal filtering, adaptive filtering, digital communications, coding, encryption, information theory, and any other problem involving the least squares framework and representation of signals in vector spaces.

While particularembodiments are described, it is understood that, after learning the teachings contained in this disclosure, modifications and generalizations will be apparent to those skilled in the art without departing from the scope of the disclosed embodiments.

A. Mathematical Notation.

In the detailed description the following mathematical notation is used. The mathematical notationis thoroughly described in this section to aid those skilled in the art to understand, implement, and practice the disclosed embodiments. In the description we use indistinctly lowercase letters to represent classes in a ring ($\mathbb{Z}_n$, +, ·) and a representative of that class in the interval [0, $n$). $\lceil . \rfloor$ represents the rounding function of a number to the nearest integer.

The used vectors have size $L$ and are represented by lower-case boldface letters, whereas matrices are represented by upper-case boldface letters. $\boldsymbol{A}' = \{a_{i,j}\}_{r,s}^{t,u}$ represents the submatrix of $\boldsymbol{A}$ of size $(t - r + 1) \times (u - s + 1)$, defined by $a'_{i,j} = a_{i+r-1, j+s-1}$.

The encryption of a number $x$ is represented by $[\![x]\!]$, and the vector (matrix) formed by the encryptions of the vector $\boldsymbol{x}$ (matrix $\boldsymbol{X}$) is represented by $[\![\boldsymbol{x}]\!]$ ($[\![\boldsymbol{X}]\!]$).

The operations performed between encrypted and clear numbers are indicated as if they were performed in the clear; e.g. $[\![\boldsymbol{X}]\!] \cdot \boldsymbol{b}$ represents the encryption of $[\![\boldsymbol{X} \cdot \boldsymbol{b}]\!]$.

Regarding the complexity calculations, the complexity of basic modular operations, like additions ($A$), products ($P$) and exponentiations ($X$) is denoted by $\text{Comp}_A$, $\text{Comp}_P$, $\text{Comp}_X$ respectively, prefixing an $E$ (i.e. $EA$, $EP$, $EX$) when they are performed under encryption. The factor $ct < 1$ denotes the ratio between the size of a clear-text value and that of an encrypted value. Finally, the subscript $cm$ denotes communication complexity, measured in number of sent encryptions, while $cp$ indicates computational complexity, with an indication of the party whose complexity is represented.

B. Techniques Employed According to One Embodiment.

According to one embodiment, the cryptographic system **102** uses secure multiparty computation techniques including homomorphic encryption and secret sharing.

According to one embodiment the cryptographic system **102** makes use of homomorphisms between the groups of clear-text and cipher-text, that allow for the execution of a given operation directly on encrypted values, without the need for decryption. This includesho-momorphic RSA cryptosystem, with a multiplicative homomorphism, or Paillier with an additive homomorphism. The methods implemented are not restricted to the use of cryptosystem for the presented protocols, as far as it presents an additive homomorphism. In this embodiment the system **102** uses an extension of Paillier encryption in its threshold and non-threshold form; that is, a $k$ out of $M$ threshold public key encryption system is a cryptosystem where the private key is distributed among $M$ parties, and at least $k$ of them are needed for decryption.

According to one embodiment the cryptographic system **102** makes use of secret sharing. In this embodiment a given value (the secret) is divided among several parties, such that the cooperation among a number of these parties is needed in order to recover the secret. None of the parties alone can have access to the secret. According to one embodiment the scheme is based on polynomials, and the need of $k$ points in order to completely determine a degree ($k - 1$) polynomial. The disclosed embodiment uses secret sharing for two-party protocols based on linear functions, without limitation, since each party can represent a plurality of entities. According to one embodiment, the system supports the computation of sums and products directly on the shares as follows: 1) let $\mathbb{Z}_n$ be the domain of the secrets; 2) then, a share of a secret $x$ is defined as two values $x_A$ and $x_B$, owned by their respective parties, such that $x_A + x_B \equiv x \mod n$; 3) hereinafter, randomizing an encrypted value $x$ means obtaining one share and providing the encryption of the other (through homomorphic addition).

C. Definitions of Protocols and Constructions According to One Embodiment.

According to one embodiment of the cryptosystem **102,** and without limitation, the protocols are based on two parties, $\mathcal{A}$ and $\mathcal{B}$, both using an additively homomorphic cryptosystem in an asymmetric scenario, where $\mathcal{A}$ can only encrypt, but $\mathcal{B}$ also possesses the decryption key, and can perform both encryption and decryption. For the problem of solving an SLE $\boldsymbol{A} \cdot \boldsymbol{x} = \boldsymbol{b}$, the system requires that $\mathcal{A}$ owns an encrypted version of the system matrix $[\![\boldsymbol{A}]\!]$, and of the independent vector $[\![\boldsymbol{b}]\!]$.

According to one embodiment, and without limitation, the SLE may have $\boldsymbol{A}$ being either a positive definite matrix or a strictly diagonally dominant matrix. In this particular case, it can be guaranteed both a solution to the system and the convergence of the studied methods, as detailed later.

Regarding the privacy requirements, according to one embodiment the cryptosystem **102** is especially adapted for semi-honest parties, in the sense that they adhere to the established protocol, but they can be curious about the information they can get from the interaction. In this embodiment, the protocols can be proven private; informally, both parties $\mathcal{A}$ and $\mathcal{B}$ can only get the information leaked from the solution to the system, and no information is leaked from the intermediate steps of the protocols.

D. Secure Computational Engine and Method for Multiplying Matrices in the Encrypted Domain.

In order to multiply two encrypted matrices, as there is no multiplication operation in an additively homomorphic cryptosystem,it is necessary to execute an interactive protocol in order to perform each product. According to one embodiment, the systems uses the following method for non-threshold encryption.

According to one embodiment of the secure protocol, and without limitation, it is assumed that there exists an additively homomorphic cryptosystem with plaintext in $\mathbb{Z}_n$ such that $\mathcal{B}$ can decrypt and both $\mathcal{A}$ and $\mathcal{B}$ can encrypt. In this embodiment, $\mathcal{A}$ owns two encrypted scalars $[\![x_1]\!]$ and $[\![x_2]\!]$ and wants to multiply them under encryption. In order to do that, according to one embodiment $\mathcal{A}$ generates two random values $r_1, r_2 \in \mathbb{Z}_n$, and uses them to blind both numbers, using homomorphic modulo-$n$ sum obtaining $[\![z_1]\!] = [\![x_1]\!] + r_1 \bmod n$, and $[\![z_2]\!] = [\![x_2]\!] + r_2 \bmod n,$ and sends them to $\mathcal{B}$ .

According to one embodiment of the method, due to his decryption capabilities, $\mathcal{B}$ can obtain $z_1$ and $z_2$ in the clear, multiply them, and reencrypt the result $[\![z_1 \cdot z_2]\!]$. $\mathcal{B}$ sends this encrypted product to $\mathcal{A}$, who, through homomorphic sums, can obtain the desired result, as

$$[\![x_1 \cdot x_2]\!] = [\![z_1 \cdot z_2]\!] - r_1 [\![x_2]\!] - r_2 [\![x_1]\!] - r_1 r_2.$$

According to the embodiment involving a threshold homomorphic cryptosystem,the procedure is analogous, with the exception that the random values must be generated by both parties.

According to the embodiment involving a product of an $L \times M$ matrix and a scalar, the protocol is exactly the same as the scalar-scalar case, with $L \times M$ scalar products in parallel.

According to the embodiment involving a matrix-matrix product, all the scalar products are performed using the scalar-scalar product protocol in parallel, with only one randomization per matrix coefficient, and the remaining operations are sums, that can be performed homomorphically. According to one embodiment, in order to minimize the computation and communication complexity, $\mathcal{A}$ may let $\mathcal{B}$ perform all the partial additions that $\mathcal{B}$ can do in the clear and $\mathcal{A}$ would need to do homomorphically.

Neglecting the complexity of the random number generation algorithms, the complexity of the whole protocol, when multiplying an $L \times M$ matrix and an $M \times N$ matrix is

$$\mathrm{Comp}_{cmMULT}(L, M, N) = M \cdot (L + N) + L \cdot N$$

$$\mathrm{Comp}_{cpMULT,A}(L, M, N) = L \cdot N \cdot M \cdot (3\mathrm{Comp}_{EA} + 2\mathrm{Comp}_{EP})$$

$$\mathrm{Comp}_{cpMULT,B}(L, M, N) = M \cdot (L + N)\mathrm{Comp}_{Decrypt} + M \cdot L \cdot N\mathrm{Comp}_P +$$

$$L \cdot N \cdot ((M - 1)\mathrm{Comp}_A + \mathrm{Comp}_{Encrypt}).$$

E. Secure Computational Engine and Method for Solving Linear Equations in the Encrypted Domain.

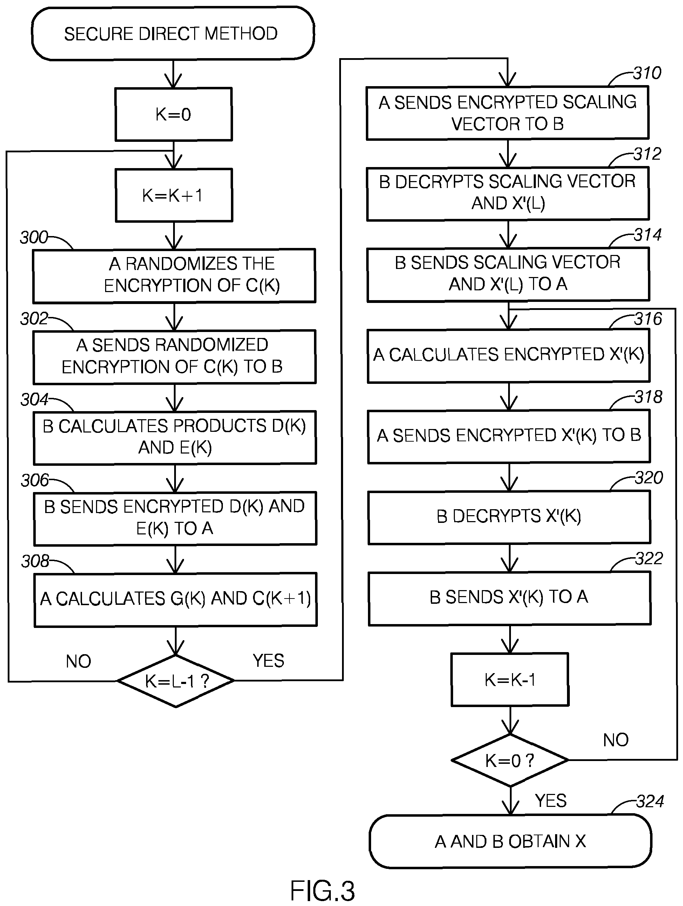

**FIG. 3** shows a block diagram of the direct method for solving systems of linear equations in the encrypted domain according to one embodiment. According to one embodiment, the cryptosystem **102** includesa method for solving systems of linear equations directly on the encrypted data **100** (i.e. without the need to decrypt the data). The method is based on Gaussian elimination, using the secure multiplication protocol for implementing the needed multiplications.

Due to the lack of a division operation under encryption, according to one embodiment of the method and cryptosystem **102** the obtained result vector is scaled, but the scale factors are stored in a second vector **s,** so that the solution can be recovered after decryption through a component-wise division. The protocol ends with two vectors **x'** and **s,** being the solution to the system $x_i = \frac{x'_i}{s_i}$, $i = 1, ..., L$.

Below is a detailed description of the methods to implement the secure protocols for solving linear systems of equations according to particular embodiments. Briefly, let $L$ denote the dimension of the system matrix **A**. For $L - 1$ iterations, being $k$ the number of the iteration ascending from 1 to $L - 1$, according to one embodiment the system repeats the following steps: $\mathcal{A}$ randomizes the encryptions of $[\![C^{(k)}]\!]$ **300**; $\mathcal{A}$ sends the randomized encryptions of $[\![C^{(k)}]\!]$ to $\mathcal{B}$ **302**; $\mathcal{B}$ calculates the products $[\![D^{(k)}]\!]$ and $[\![E^{(k)}]\!]$, using the received encryptions **304**; $\mathcal{B}$ sends the encrypted $[\![D^{(k)}]\!]$ and $[\![E^{(k)}]\!]$ to $\mathcal{A}$ **306**; $\mathcal{A}$ calculates $[\![G^{(k)}]\!]$ and $[\![C^{(k+1)}]\!]$, using the received encryptions **308**. Then, $\mathcal{A}$ possesses the encrypted scaling vector, and sends it to $\mathcal{B}$ **310**. $\mathcal{B}$ decrypts the received scaling vector and the value of $x'_L$ **312**. $\mathcal{B}$ sends the decrypted scaling vector and $x'_L$ to $\mathcal{A}$ **314**. Then, for $L - 1$ iterations, being $k$ the number of the iteration, descending from $L - 1$ to 1, the following steps are repeated: $\mathcal{A}$ calculates the encrypted $[\![x'_k]\!]$, using the values that $\mathcal{A}$ possesses **316**; $\mathcal{A}$ sends the encrypted $[\![x'_k]\!]$ to $\mathcal{B}$ **318**; $\mathcal{B}$ decrypts $[\![x'_k]\!]$ **320**; $\mathcal{B}$ sends the decrypted $x'_k$ to $\mathcal{A}$ **322**. After these operations, $\mathcal{A}$ and $\mathcal{B}$ calculate the solution **x** to the system of linear equations **A · x = b**, using the values that they possess **324**.

Let $A \in \mathcal{M}_{L \times L}(\mathbb{Z})$ be a quantized symmetric positive-definite matrix, or a diagonally dominant matrix, and $b \in \mathbb{Z}^L$ be a quantized column vector. The quantization step $\Delta$ is such that the absolute value of every quantized element is upper bounded by a constant $T$.

According to one embodiment, and without limitation, the secure protocol method assumes that $\mathcal{B}$ knows the decryption key of an additive homomorphic cryptosystem, and both $\mathcal{A}$ and $\mathcal{B}$ can produce encryptions using this cryptosystem; $\mathcal{A}$ possesses the encrypted matrix $[\![A]\!]$ and the encrypted vector of independent terms $[\![b]\!]$. Both parties engage in an interactive protocol in order to obtain the solution **x** to the linear system **A · x = b**. According to one embodiment, the protocol is described in detail as follows.

Following the Gaussian elimination algorithm, we call $G^{(0)} = G$ to the concatenation of $G = [A|b]$. The algorithm is executed in $L - 1$ steps. At each step $k$, the matrix $G$ is modified to obtain an equivalent system $G^{(k)}$ in which the $k$-th unknown is not present in the last $L - k$ equations.

For the $k$-th step of the algorithm, the first $k - 1$ elements of the $L - k + 1$ last rows of $G^{(k-1)}$ are zero; $\mathcal{A}$ owns an encrypted version of the non-zeroed elements of $G^{(k-1)}$. The secure protocol proceeds as follows:

1. $\mathcal{A}$ provides randomized encrypted versions of the submatrix $C^{(k)}$ formed by the last ($L - k + 2$) columns of the last ($L - k + 1$) rows of $G^{(k-1)}$;

2. $\mathcal{B}$, through decryption and reencryption, calculates the (randomized) products of the $(L - k) \times (L - k + 1)$ matrices $D^{(k)}$ and $E^{(k)}$, defined as $[\![d^{(k)}_{j,m}]\!] = [\![c^{(k)}_{1,m+1} \cdot c^{(k)}_{j+1,1}]\!]$, and $[\![e^{(k)}_{i,j}]\!] = [\![c^{(k)}_{1,1} \cdot c^{(k)}_{i+1,j+1}]\!]$, and sends the randomized encryptions to $\mathcal{A}$.

3. $\mathcal{A}$ derandomizes the received encryptions and, using homomorphic operations, obtains the next iteration of **G**:

$$[\![G^{(k)}]\!] = \left( \frac{\{[\![g^{(k-1)}_{i,m}]\!]\}^{(k,L+1)}_{(1,1)}}{\mathbf{0}_{L-k,k} \ \Big| \ [\![F^{(k)}]\!]} \right),$$

where $[\![F^{(k)}]\!]$ is an $(L - k) \times (L - k + 1)$ matrix with elements $[\![f^{(k)}_{i,m}]\!] = [\![e^{(k)}_{i,m}]\!] - [\![d^{(k)}_{i,m}]\!]$.

After *L* - 1 iterations, $\mathcal{A}$ has an encrypted upper triangular matrix appended to an encrypted vector, $[\![\boldsymbol{G}^{(L-1)}]\!]$, that constitute a system with the same solution as the original one.

According to one embodiment, in order to solve the system of linear equations, both parties initiate the process of back substitution under encryption, consisting of *L* iterations: in each iteration, an element of the vector *x'* and the corresponding element of the scale vector *s* are obtained. As they are revealed at the output, and they are needed in order to calculate the subsequent elements of *x'*, they can be decrypted before the next iteration in order to lower the complexity by reducing the number of the needed multiplication protocols. For the first step:

1. $\mathcal{A}$ sends $\{[\![g_{i,i}^{(L-1)}]\!]\}_{i=1}^{L}$ and $[\![g_{L,L+1}^{(L-1)}]\!]$.

2. $\mathcal{B}$ obtains, through decryption, the scaling vector *s*, with $s_i = \prod_{l=i}^{(L)} g_{l,l}^{(L-1)}$, and the value $x'_L = g_{L,L+1}^{(L-1)}$, and sends them back to $\mathcal{A}$.

In each subsequent *k*-th step, $\mathcal{A}$ calculates, using homomorphic operations:

$$[\![x'_{L-k+1}]\!] = [\![g_{L-k+1,L+1}^{(L-1)}]\!] \cdot s_{L-k+2} - \sum_{l=L-k+2}^{L} [\![g_{L-k+1,l}^{(L-1)}]\!] \cdot x'_l \frac{s_l}{s_{L-k+2}},$$

and sends $[\![x'_{L-k+1}]\!]$ to $\mathcal{B}$ to obtain its decryption.

With this embodiment of the protocol, the system does not discloseany element of the original matrix *A* nor of the independent terms vector *b.* Furthermore, every step of the protocol can be proven secure with semi-honest parties, due to the semantical security of the underlying homomorphic cryptosystem, the security of the used multiplication protocols, and the fact that all the unencrypted values (besides the result and the scaling vector) that each party can access are random and uncorrelated. Nevertheless, the scaling vector reveals the diagonal of the upper triangular matrix of an equivalent system, which gives information about the eigenvalues of the original matrix. This information affects *L* scaled elements out of $\frac{L(L+1)}{2}$.

It must be noted that having the values of the principal diagonal of the upper-triangular matrix of the equivalent system yields the possibility of calculating its condition number, or at least, its bound

$$\kappa(\boldsymbol{U}) \geq \frac{\max_i(|u_{ii}|)}{\min_i(|u_{ii}|)}.$$

Thus, this disclosed embodiment constitutes a clear advantage in terms of conditioning and efficiency: before executing the back substitution protocol, the rows of *G*$^{(L)}$ can be multiplied by appropriate factors in order to lower the conditionnumber and minimizeerror propagation due to working with a fixed point precision. Also, the vector of multiplicative factors $s_i$ can be adequately quantized in the clear to achieve this same goal.

The disclosed embodiment of the protocol does not limit the number *N* of SLEs sharing the same system matrix *A* and with different independent term vectors $b_i$ that can be solved in parallel; all the vectors $b_i$ can be appended to the system matrix, forming a $L \times (L + N)$ matrix *G$_{ext}$* and at each step of the previous protocol, the operations that must be performed on the last column of *G*$^{(k)}$ are replicated for the last *N* columns of $\boldsymbol{G}_{ext}^{(k)}$.

When solving one system *A* · *x* = *b,* the Gaussian Elimination (*GE*) protocol is performed in (*L* - 1) rounds of communication, with total complexity

$$\mathrm{Comp}_{cmGE} = (L^3 + L^2 - 2)$$

$$\mathrm{Comp}_{cpGE,A} = \frac{1}{3}\left(L^3 + 3L^2 + 2L - 6\right)\mathrm{Comp}_{Encrypt} + \dots$$
$$\frac{1}{3}\left(2L^3 + 3L^2 + L - 6\right)\mathrm{Comp}_{EA}$$

$$\mathrm{Comp}_{cpGE,B} = \frac{1}{3}\left(L^3 + 3L^2 + 2L - 6\right)\mathrm{Comp}_{Decrypt} + \dots$$
$$\frac{2}{3}\left(L^3 - L\right)\left(\mathrm{Comp}_{Encrypt} + \mathrm{Comp}_P\right).$$

The protocol of Back Substitution (*BS*) is performed in *L* rounds of communication, with total complexity

$$\mathrm{Comp}_{cmBS} = 2L \cdot \left(1 + ct\right)$$

$$\mathrm{Comp}_{cpBS,A} = \frac{1}{2}(L^2 + L - 2)\mathrm{Comp}_{EP} + \frac{1}{2}(L^2 - L)\mathrm{Comp}_{EA}$$

$$\mathrm{Comp}_{cpBS,B} = 2L\mathrm{Comp}_{Decrypt}.$$

According to one embodiment the coefficients of the system matrix *A* are quantized versions of the real-valued coefficients, with a quantization step $\Delta$. Furthermore, the absolute value of the quantized coefficients is bounded by an integer $T > 0$. Then, it is possible to estimate the value of $T$ needed to fit all the performed operations inside a cipher that can represent integers in the range [0, *n*) without rounding problems.

For the first part of the protocol according to one embodiment (the direct secure Gaussian elimination), each iteration multiplies two numbers that were obtained in the previous iteration and adds them up, so the previous bound gets squared and doubled:

$$|t_1|, |t_2|, |t_3|, |t_4| < T \Rightarrow |t_1 \cdot t_2 - t_3 \cdot t_4| < 2T^2.$$

In this embodiment all the elements of the *k*-th row of the resulting $G^{(L-1)}$ are bounded by $(2^{2k-1-1})T^{2k}$, and constitute the representation of their real-valued equivalents, quantized by $\Delta^{2k-1}$. Thus, the cipher must be such that $n > (2^{2k-1-1})T^{2k}$ in order to fit all the numbers involved in this protocol. This means that the bit size of the modulus of the cipher must grow exponentially with the dimensionality of the system, which results in poor scalability.

For the second part of the protocol according to this embodiment, after the diagonal elements are disclosed, they can be re-quantized in order to make them relative to the lowest scale and lower the bit-size requirements of the cipher; but in the worst case, without re-quantizing the scale factors, the largest number present after running the whole protocol is $2^{2L-L-1}T^{2^{1+L-4}}$. That also constrains the size of the cipher.

F. Secure Computational Engine and Iterative Protocol for Solving Linear Equations in the Encrypted Domain.

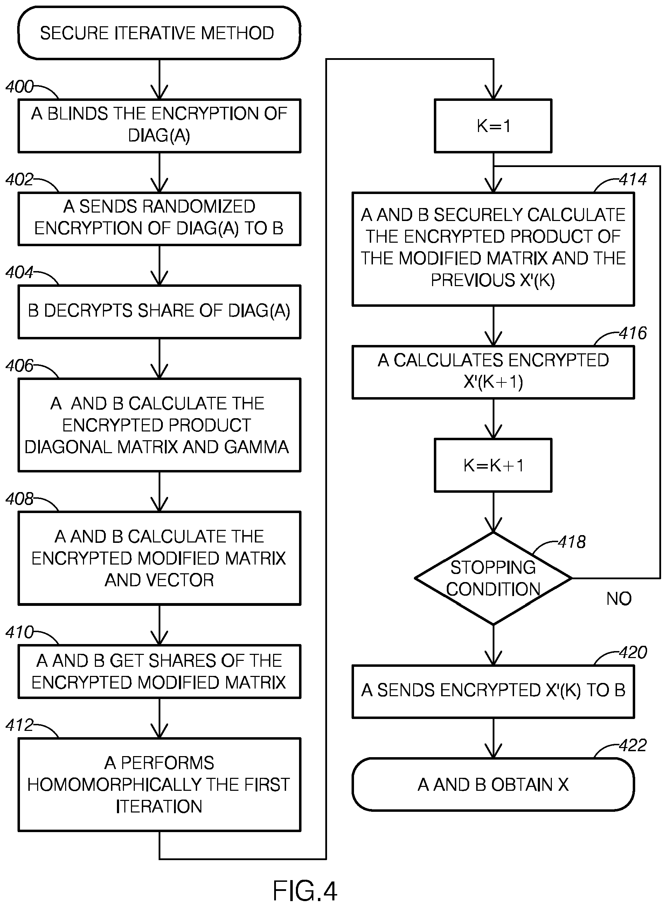

**FIG. 4** shows a block diagram of an illustrative method for solving systems of linear equations iteratively in the encrypted domain according to one embodiment. According to one embodiment, the cryptosystem **102** includesan iterative method (protocol) for solving systems of linear equations directly on the encrypted data **100** (i.e. without the need to decrypt the data). According to one embodiment presented here for illustrative purposes only, and not by way of limitation, the cryptosystem includes an iterative method for solving systems of linear equations as described as follows. Let *L* denote the dimension of the system matrix *A*. $\mathcal{A}$ blinds the encryption of the principal diagonal of $[\![\boldsymbol{A}]\!]$ through homomorphic addition **400**. $\mathcal{A}$ sends these encryptions to $\mathcal{B}$ **402**, so that $\mathcal{B}$ can decrypt a share of the principal diagonal of $[\![\boldsymbol{A}]\!]$ **404**. Then, $\mathcal{A}$ and $\mathcal{B}$ calculate, through parallel secure multiplication protocols, the encrypted diagonal matrix $[\![\gamma\boldsymbol{D}^{-1}]\!]$ and the factor $\gamma$ **406**. $\mathcal{A}$ and $\mathcal{B}$, using the secure multiplication protocol, can calculate encryptions of the modified matrix $[\![\gamma M]\!]$ and the modified vector $[\![\gamma c]\!]$ **408**. After that, $\mathcal{A}$ and $\mathcal{B}$ end up with shares of $[\![\gamma M]\!]$ **410**. $\mathcal{A}$ performs the first iteration of the protocol using homomorphic operations **412**, obtaining $[\![x'_1]\!] = [\![\gamma x^{(1)}]\!]$. Then, for each iteration, being $k$ the number of the current iteration, both parties follow the next procedure: $\mathcal{A}$ and $\mathcal{B}$ execute the secure product protocol on $[\![\gamma M]\!]$ and $[\![x'_k]\!]$ **414**; using the result of the previous operation, $\mathcal{A}$ homomorphically calculates the encryption of $[\![x'_{k+1}]\!]$ **416**. After each iteration or after a predefined number of iterations, a stopping conditionis checked **418**. When the stopping condition **418** is fulfilled, the protocol stops, and $\mathcal{A}$ sends the encrypted $[\![x'_k]\!]$ to $\mathcal{B}$ for decryption **420**, and both parties obtain the resulting $x^{(k)}$ **422**.

According to one embodiment, the general form of stationary iterative methods for solving SLEs is

$$x^{(k+1)} = M \cdot x^{(k)} + c.$$

According to one embodiment, and without limitation, the system matrix is decomposed into $A = D(L+I+U)$, a diagonal matrix $D$, a lower triangular matrix $L$ and an upper triangular matrix $U$, having both $L$ and $U$ zeros in their principal diagonals. Then, $M = -(L + U)$ and $c = D^{-1}b$. We refer to this embodiment as the Jacobi method, Jabobi embodiment, Jacobi protocol, or Jacobi secure protocol due to the nature of the matrix decomposition and the iterative method for solving the system of linear equations. As divisions are not supported homomorphically, the previous iteration cannot be implemented directly. Thus, according to this embodiment, the division is simulated by multiplying each row of $A$ by the diagonal elements of the remaining rows, what results in multiplying the matrix $M$ of Jacobi method by a scalar factor $\gamma = \left( \prod_{i=1}^{L} a_{ii} \right)$.

$$A' = -\gamma D^{-1} \cdot (A - D) = \gamma M.$$

According to the Jacobi embodiment, the factor $\gamma$ is propagated at every iteration of the algorithm:

$$\gamma^k x^{(k)} = -\gamma D^{-1} (A - D) \cdot \gamma^{k-1} x^{(k-1)} + \gamma^k D^{-1} b.$$

According to one embodiment the secure iterative protocol assumes that $\mathcal{B}$ can decrypt and both $\mathcal{A}$ and $\mathcal{B}$ can encrypt with an additive homomorphic scheme, and that $\mathcal{A}$ owns encryptions of $[\![A]\!]$ and $[\![b]\!]$ with this homomorphic system. In order to allow for efficient computation, the following protocol is executed:

1. $\mathcal{A}$ can blind the principal diagonal of $[\![A]\!]$ and send it to $\mathcal{B}$.

2. $\mathcal{B}$ decrypts it, both parties ending up with additive shares of the diagonal elements $\{a_{ii}\}$.

3. With this shares, both parties can securely compute shares of the diagonal matrix $(\gamma D^{-1})_{jj} = \prod_{\substack{i=1 \\ i \neq j}}^{L} a_{ii},$ through $\lceil \log_2(L - 1) \rceil$ rounds of parallel secure multiplication protocols. They can also calculate the value of $\gamma$, and disclose it for use in the following steps of the protocol.

4. $\mathcal{A}$ can then calculate the encryption of $[\![\gamma M]\!] = [\![\gamma D^{-1}]\!] \cdot [\![A - D]\!]$ and $[\![\gamma c]\!] = [\![\gamma D^{-1}]\!] \cdot [\![b]\!]$, invoking the secure multiplication protocol.

5. Then, $\mathcal{A}$ sends $\mathcal{B}$ a blinded and encrypted version of $[\![\gamma M]\!]$, that $\mathcal{B}$ decrypts for use in the following iterations.

After these initial steps, for the first iteration of the secure protocol both parties agree in an initial vector $x^{(0)}$ and $\mathcal{A}$ calculates, through homomorphic additions and multiplications, the encryption of $[\![\gamma x^{(1)}]\!] = [\![\gamma M]\!] \cdot x^{(0)} + [\![\gamma c]\!]$.

For each subsequent iteration, $\mathcal{A}$ calculates the encryption of $\gamma \cdot [\![\gamma^{k-1}c]\!]$, and then both parties use the secure multiplication protocol and homomorphic additions in order to obtain the vector for the following step

$$[\![x'_k]\!] = [\![\gamma^k x^{(k)}]\!] = [\![\gamma M]\!] \cdot [\![\gamma^{k-1} x^{(k-1)}]\!] + \gamma \cdot [\![\gamma^{k-1}c]\!].$$

It must be noted that the matrix $[\![\gamma M]\!]$ does not have to be communicated at each iteration, as its blinded version was stored by **B** at the initial step. Thus, only two vectors per iteration are sent between $\mathcal{A}$ and $\mathcal{B}$.

After each iteration, the factor $\gamma$ multiplies the result; thus, after a number of steps, the cipher will not be able to accommodate the scaled number, and the protocol will have to stop. It must be noted that the accumulated factor is not only $\gamma$, but also the quantization step $\Delta$ used for the initial quantization of the coefficients of both the system matrix **A** and the vector **b** in order to make them integers so that they can be encrypted. This factor must also be taken into account every time $\gamma$ multiplies vector **c,** so that the homomorphically added vectors be quantized with the same scaling factor.

According to one embodiment, each step of the protocol according to this embodiment can be proven secure with semihonest parties, due to the semantic security of the underlying cryptosystem, the security of the multiplication protocol, and the fact that the unencrypted values that each party sees are random and uncorrelated.

The complexity of the initial part (Jacobi Initial, *JI*) of the protocol is

$$\mathrm{Comp}_{cmJI} = 3L^2 + 2L\lceil \log_2(L-1)\rceil - 3L + 5 + ct$$

$$\mathrm{Comp}_{cpJI,A} = (5L^2 + 4L\lceil \log_2(L-1)\rceil - 5L + 8)\mathrm{Comp}_{EA} +$$

$$(L^2 + L\lceil \log_2(L-1)\rceil - L + 2)2\mathrm{Comp}_{EP}$$

$$\mathrm{Comp}_{cpJI,B} = (L^2 + L\lceil \log_2(L-1)\rceil - L + 2)\left(\mathrm{Comp}_{Decrypt} + \mathrm{Comp}_P +\right.$$

$$\left.\mathrm{Comp}_{Encrypt}\right) + (L^2 - L + 1)\mathrm{Comp}_{Decrypt}.$$

The first iteration (*J*1) does not involve any interaction, and $\mathcal{A}$ incurs in a computational complexity of $\mathrm{Comp}_{cpJ1,A} = L^2(\mathrm{Comp}_{EP} + \mathrm{Comp}_{EA})$.

The complexity of each of the subsequent iterations of this protocol (*J*) is the following

$$\mathrm{Comp}_{cmJ} = 2L$$

$$\mathrm{Comp}_{cpJ,A} = (3L^2 - 2L)\mathrm{Comp}_{EA} + (2L^2 - L)\mathrm{Comp}_{EP} + L\mathrm{Comp}_{EA}$$

$$\mathrm{Comp}_{cpJ,B} = L\left(\mathrm{Comp}_{Decrypt} + \mathrm{Comp}_{Encrypt}\right) + (L^2 - L)\mathrm{Comp}_P +$$

$$(L^2 - 2L)\mathrm{Comp}_A.$$

After a number of iterations, either the solution can be disclosed, or an error metric can be obtained to determine whether convergence has been achieved. While the choice of this error metric is arbitrary, one possibility according to one embodiment is to homomorphically subtract $[\![x^{(k)}]\!]$ - $[\![x^{(k-1)}]\!]$, and either decrypt the result or perform *L* parallel encrypted comparisons with a predetermined threshold.

According to one embodiment, and without limitation, the coefficients of the system matrix **A** are quantized versions of the real-valued coefficients, with a quantization step $\Delta$, such that their quantized absolutevalue is bounded by an integer *T* > 0.

For the first part of the iterative protocol embodiment disclosed, where the factor $\gamma$ and the matrix $\gamma D^{-1}$ are calculated, $\gamma$ is the highest number that the system will have to represent, and it is bounded by $T^L$; the bound for the elements of $\gamma D^{-1}$ is $T^{L-1}$. Furthermore, as $\gamma$ is disclosed in the following step, it can constitute a more accurate bound to the encrypted coefficients of $\gamma D^{-1}$. A bound for the absolute value of the coefficients of $\gamma M$ and of $\gamma c$ is $\min(T^L, \gamma T)$.

According to one particular embodiment, the bound to which the elements of the first vector $x^{(1)}$ are subject is $L \cdot T^{L+1}$.

In each iteration, the previous bound is multiplied by $L \cdot T^L$, meaning that the bound for the elements of the $k$-th iteration is $L^k \cdot T^{k \cdot L+1}$, i.e., the needed bit-size of the cipher is linear both in the dimension of the system and in the maximum number of iterations that can be performed without errors. Furthermore, the quantization step of the elements of $x^{(k)}$ will be $\Delta^{kL}$.

When dealing with iterative algorithms such as the embodiment presented here, it is necessary to determine whether the algorithm can converge or not before applying the algorithm. In the general case of stationary iterative methods, the necessary and sufficient condition for their convergence with an arbitrary initial vector $x^{(0)}$ is that $\max_i |\lambda_i(M)| < 1$, where $\lambda_i(M)$ are the eigenvalues of $M$. In this particular embodiment, $M = -D^{-1} \cdot (A - D)$. Let us assume that $A$ is a strictly diagonally dominant matrix with bounded coefficients $|a_{ij}| \le T$. By Ostrowski's theorem, the eigenvalues of $M$ are located in the union of $L$ discs

$$\mathcal{L}_1 \triangleq \bigcup_{i=1}^{L} \{z \in \mathbb{C} : |z - m_{ii}| \le \min\{R_i, C_i\}\},$$

where $m_{ii} = 0$, $m_{ij} = \dfrac{a_{ij}}{a_{ii}}$, $= i \ne j$, and

$$R_i = \sum_{j=1, j \ne i}^{L} |m_{ij}|,$$

$$C_i = \sum_{j=1, j \ne i}^{L} |m_{ji}|.$$

As $A$ is strictly diagonally dominant, $\sum_{j=1, j \ne i}^{L} |a_{ij}| < |a_{ii}| \Rightarrow R_i < 1$. Thus, it is possible to bound the moduli of the eigenvalues of $M$ as

$$|\lambda_i(M)| < 1.$$

Consequently, the Jacobi embodiment disclosed always converges for strictly diagonally dominant matrices, and the test of convergence is not needed.

G. Secure Iterative Protocol for Performing Matrix Inversions and Solving Systems of Equations Based on an Iterative Protocol.

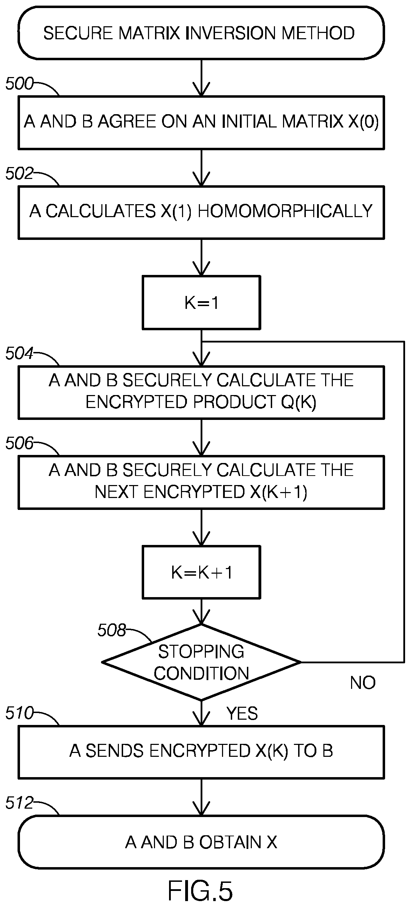

**FIG. 5** shows an illustrative block diagram of the operation of the cryptographic system. Let $L$ denote the dimension of the system matrix $A$. $\mathcal{A}$ and $\mathcal{B}$ agree on an initial matrix $X^{(0)}$ **500** that fulfills the convergence criteria. For the first iteration, $\mathcal{A}$ calculates homomorphically the encryption of the matrix $X^{(1)}$ **502**. For each subsequent iteration, being $k$ the number of the current iteration, both parties execute the following steps: $\mathcal{A}$ and $\mathcal{B}$ use the secure multiplication protocol in order to get the encrypted matrix $Q^{(k)}$ **504**; $\mathcal{A}$ and $\mathcal{B}$ use the secure multiplication protocol in order to get the encrypted matrix $X^{(k+1)}$ **506**. After each iteration or after a predefined number of iterations, a stopping condition is checked **508**. When the stopping condition **508** is fulfilled, the protocol stops, and $\mathcal{A}$ sends the encrypted $[\![ X^{(k)} ]\!]$ to

$\mathcal{B}$ for decryption **510**, and both parties obtain the resulting $X^{(k)}$ **512**.

There are cases in which, instead of or additionally to solving a SLE, the inverse of the system matrix is also needed, like the case of regression analysis in statistics. For these applications, the system matrix **A** must be inverted. According to one embodiment the cryptosystems includesa secure protocol for performing the execution of an iterative method. We refer to this embodiment as the Newton embodiment, Newton iterative protocol, or Newton method, interchangeably. According to one embodiment, one iteration of this method has the following expression

$$X^{(k)} = X^{(k-1)} \cdot \left(2I - AX^{(k-1)}\right),$$

where $X^{(k)}$ will converge to $A^{-1}$.

According to one embodiment, the secure protocol for the Newton secure protocol executes an initial iteration with an agreed initial value $X^{(0)}$, performed uniquely with homomorphic operations. Then, the following iterations make use of the secure multiplication protocol and homomorphic sums. Each iteration needs two rounds of communication:

1. The first one to calculate $\llbracket Q^{(k)} \rrbracket = \llbracket A \rrbracket \cdot \llbracket X^{(k-1)} \rrbracket$,

2. the second one to calculate $\llbracket X^{(k)} \rrbracket = \llbracket X^{(k-1)} \rrbracket \cdot (2I - \llbracket Q^{(k)} \rrbracket)$.

According to one embodiment, the result gets multiplied after each iteration by the quantization step of the used integers, so after a sufficiently high number of iterations the protocol stops.

The protocol is provably secure with semihonest parties due to the semantic security of the cryptosystem, and the security of the sequentially composed multiplication protocols.

The complexity of the disclosed embodiments is evaluated as follows. The first step involves only one round of interaction, and its complexity is given by

$$\mathrm{Comp}_{cmNEWI} = \mathrm{Comp}_{cmMULT}(L, L, L)$$

$$\mathrm{Comp}_{cpNEWI,A} = \mathrm{Comp}_{cpMULT,A}(L, L, L) + L^3\mathrm{Comp}_{EP} + (L^3 - L^2 + L)\mathrm{Comp}_{EA}$$

$$\mathrm{Comp}_{cpNEWI,B} = \mathrm{Comp}_{cpMULT,B}(L, L, L).$$

The complexity of each of the subsequent iterations of this protocol is the following

$$\mathrm{Comp}_{cmNEW} = 2\mathrm{Comp}_{cmMULT}(L, L, L)$$

$$\mathrm{Comp}_{cpNEW,A} = 2\mathrm{Comp}_{cpMULT,A}(L, L, L) + L\mathrm{Comp}_{EA}$$

$$\mathrm{Comp}_{cpNEW,B} = 2\mathrm{Comp}_{cpMULT,B}(L, L, L).$$

Let us assume that the elements of the matrix **A** are quantized with a quantization step $\Delta$, and their absolutevalue is bounded by $T > 0$. Then, the elements of matrix resulting from the first iteration of the protocol are bounded by $L^2T^3 + 2T$. For each of the next iterations, the bound $T^{(k-1)}$ is updated as $T^{(k)} = (T^{(k-1)})^2 \cdot T \cdot L^2 + 2 \cdot K$. Thus, the order of the bound after $m$ iterations is $O(T^{2m+1-1} \cdot L^{2m+1-2})$, i.e. the bit-size of the cipher is exponential in the number of iterations.

The convergence of the disclosed embodiment of the Newton secure iterative protocol is assured whenever the initial matrix $X^{(0)}$ satisfies $||AX^{(0)} - I|| < 1$. As the initial vector is chosen by both parties, it can be such that this condition is fulfilled, given the bounds to the elements of **A** and the bounds to the eigenvalues obtained by the applicationof Ostrowski's theorem.

H. Extension to Systems with Complex Elements According to One Embodiment.

The protocol presented in the earlier section does not impose any restrictions on the matrix coefficients. It can be used for both unrestricted real coefficients and complex coefficients. In this section we explain how the protocol can be implemented in the case of complex coefficients.

For convenience, and without loss of generality, a binomial representation is chosen for complex numbers; the encryption of a complex number $[\![x]\!]$ is given by the pair $[\![x]\!] \triangleq ([\![\mathcal{R}\{x\}]\!], [\![\mathcal{I}\{x\}]\!])$, that is, the pair of encryptions of its real and imaginary parts.

According to one embodiment, the complex addition operation can be performed through two real additions; thus, it can be performed homomorphically between two encrypted complex numbers as two homomorphic real additions. Regarding the complex product, when it involves one known factor and one encrypted number, it can also be performed homomorphically as four homomorphic multiplications and two homomorphic additions. When involving two encrypted factors, it is performed through four parallel (real) scalar multiplication protocols and two homomorphic additions.

Thus, the matrix multiplication protocol disclosed in the previous section works on complex numbers by adopting the proposed encrypted complex representation, and by substituting the real additions and products by their corresponding complex operations. As a result, the communication complexity is doubled, the number of performed products is multiplied by four, and the number of performed additions is doubled. For the secure SLE solving protocol, the needed modifications are essentially the same, being the involved scale factors also complex. We must remark that the hypotheses on the system matrix that were imposed for ensuring the convergence of the algorithms are kept unaltered when dealing with systems with complex coefficients, as they are general hypotheses not restricted to systems with real coefficients.

While particular embodiments have been described, it is understood that, after learning the teachings contained in this disclosure, modifications and generalizations will be apparent to those skilled in the art without departing from the scope of the disclosed embodiments. It is noted that the foregoing examples have been provided merely for the purpose of explanation and are in no way to be construed as limiting. While the system has been described with reference to various embodiments, it is understood that the words which have been used herein are words of description and illustration, rather than words of limitations. Further, although the system has been described herein with reference to particular means, materials and embodiments, the actual embodiments are not intended to be limited to the particulars disclosed herein; rather, the system extends to all functionally equivalent structures, methods and uses, such as are within the scope of the appended claims. Those skilled in the art, having the benefit of the teachings of this specification, may effect numerous modifications thereto and changes may be made without departing from the scope of the disclosed embodiments in its aspects.

**Claims**

1. A cryptographic system (102), comprising:

   a memory configured to store computer-executable instructions; and
   at least one hardware processor configured to execute said computer-executable instructions that when executed cause the processor to perform matrix multiplications in an encrypted domain (104), and to solve systems of linear equations in the encrypted domain (106) using a secure iterative protocol based on privacy-preserving protocols based on homomorphic computation (108) and secret sharing (110), said secure iterative protocol being implemented as a stationary iterative method and being substantially equivalent to an iterative Jacobi update matrix;
   wherein said secure iterative protocol comprises calculating the shares of a diagonal of a system matrix (400 - 406), calculating an encrypted modified matrix and an encrypted modified vector (408), calculating an encrypted output vector (414 - 416) based on homomorphic computation (108) and secret sharing (110), and decrypting the elements of said output vector (422);

   whereby said cryptographic system (102) is capable of performing secure computations, signal processing, and data analysis directly on encrypted data (100) in untrusted environments without the need to decrypt said encrypted data (100).

2. A computer program product comprising computer-executable instructions, which, when executed by a hardware processor, causes the hardware processor to perform a cryptographic method comprising:

performing matrix multiplications in an encrypted domain (104); and

solving systems of linear equations in the encrypted domain (106) using a secure iterative protocol based on privacy-preserving protocols based on homomorphic computation (108) and secret sharing (110), said secure iterative protocol being implemented as a stationary iterative method and being substantially equivalent to an iterative Jacobi update matrix;

wherein said secure iterative protocol comprises calculating the shares of a diagonal of a system matrix (400 - 406), calculating an encrypted modified matrix and an encrypted modified vector (408), calculating an encrypted output vector (414 - 416) based on homomorphic computation (108) and secret sharing (110), and decrypting the elements of said output vector (422);

whereby said cryptographic method is capable of performing secure computations, signal processing, and data analysis directly on encrypted data in untrusted environments without the need to decrypt said encrypted data (100).

3. The computer program product according to claim 2, embodied on a storage medium.

4. The computer program product according to claim 2, carried on a signal for transmission.

**Patentansprüche**

1. Ein kryptographisches System (102), umfassend:

einen Speicher, der konfiguriert ist, um durch Computer ausführbare Anweisungen zu speichern; und

mindestens einen Hardwareprozessor, der konfiguriert ist, um die durch Computer ausführbaren Anweisungen auszuführen, die, wenn sie ausgeführt werden, dazu führen, dass der Prozessor Matrixmultiplikationen in einem verschlüsselten Domain (104) und Systeme linearer Gleichungen im verschlüsselten Domain (106) unter Verwendung von einem sicheren iterativen Protokoll beruhend auf privatheitsbewahrenden Protokollen durchführt, die auf homomorphen Berechungsverfahren (108) und Geheimnisteilung (110) beruhen, wobei das sichere iterative Protokoll als stationäres iteratives Verfahren implementiert wird und einer iterativen Jacobi-Update-Matrix im Wesentlichen gleichgestellt ist;

wobei das sichere iterative Protokoll das Berechnen der Anteile einer Diagonale einer Systemmatrix (400 - 406), das Berechnen von einer verschlüsselten modifizierten Matrix und einem verschlüsselten modifizierten Vektor (408), das Berechnen von einem verschlüsselten Ausgangsvektors (414 - 416) beruhend auf homomorphen Berechungsverfahren (108) und Geheimnisteilung (110), und das Entschlüsseln der Elemente des Ausgangsvektors (422) umfasst;

wobei das kryptographische System (102) sichere Berechnungen, Verarbeitung von Signalen und Datenanalyse direkt von verschlüsselten Daten (100) in unsicheren Umgebungen ohne die verschlüsselten Daten (100) entschlüsselt zu müssen, durchführen kann.

2. Ein Computerprogrammprodukt umfassend durch Computer ausführbare Anweisungen, die, wenn sie durch einen Hardwareprozessor durchgeführt werden, dazu führen, dass der Hardwareprozessor ein kryptographisches Verfahren durchführt, das folgendes umfasst:

durchführen von Matrixmultiplikationen in einem verschlüsselten Domain (104); und

lösen von Systemen linearer Gleichungen im verschlüsselten Domain (106), unter Verwendung von einem sicheren iterativen Protokoll beruhend auf privatheitsbewahrenden Protokollen, die auf homomorphen Berechungsverfahren (108) und Geheimnisteilung (110) beruhen, wobei das sichere iterative Protokoll als stationäres iteratives Verfahren implementiert wird und einer iterativen Jacobi-Update-Matrix im Wesentlichen gleichgestellt ist;

wobei das sichere iterative Protokoll das Berechnen der Anteile von einer Diagonale einer Systemmatrix (400 - 4006), das Berechnen von einer verschlüsselten modifizierten Matrix und einem verschlüsselten modifizierten Vektor (408), das Berechnen von einem verschlüsselten Ausgangsvektor (414 - 416) beruhend auf homomorphen Berechnungsverfahren (108) und Geheimnisteilung (100) und das Entschlüsseln der Elemente des Ausgangsvektors (422) umfasst;

wobei das kryptographische Verfahren sichere Berechnungen, Verarbeitung von Signalen und Datenanalyse direkt von verschlüsselten Daten in unsicheren Umgebungen, ohne die verschlüsselten Daten (100) entschlüsselt zu müssen, durchführen kann.

**3.** Das Computerprogrammprodukt nach Anspruch 2, das in einem Speichermedium enthalten ist.

**4.** Das Computerprogrammprodukt nach Anspruch 2, das in einem Signal zur Übertragung getragen ist.

## Revendications

**1.** Un système cryptographique (102), comprenant :

une mémoire configurée pour stocker des instructions exécutables par ordinateur ; et
au moins un processeur hardware configuré pour exécuter lesdites instructions exécutables par ordinateur qui, lorsqu'elles sont exécutées, entraînent la réalisation de multiplications matricielles par le processeur dans un domaine crypté (104), et la résolution par celui-là de systèmes d'équations linéaires dans le domaine crypté (106) en utilisant un protocole itératif sécurisé sur la base de protocoles assurant la confidentialité basés sur du calcule homomorphe (108) et du partage de secret (110), ledit protocole itératif sécurité étant implémenté comme un procédé itératif stationnaire et étant essentiellement équivalent à une matrice d'actualisation jacobienne itérative ;
dans lequel ledit protocole itératif sécurisé comprend calculer les parts d'une diagonale d'une matrice de système (400 - 406), calculer une matrice modifiée cryptée et un vecteur modifié crypté (408), calculer un vecteur de sortie crypté (414 - 416) sur la base de calcul homomorphe (108) et de partage de secret (110), et décrypter les éléments dudit vecteur de sortie (422) ;
dans lequel ledit système cryptographique (102) est capable d'effectuer des calculs sécurisés, du traitement de signaux, et de l'analyse de données directement sur des données cryptées (100) dans des environnements non fiables sans avoir à décrypter lesdites données cryptées (100).

**2.** Un produit de programme informatique comprenant des instructions exécutables par ordinateur qui, lorsqu'elles sont exécutées par un processeur hardware, entraînent la mise en exécution d'un procédé cryptographique par le processeur hardware comprenant :

effectuer des multiplications matricielles dans un domaine crypté (104) ; et
résoudre des systèmes d'équations linéaires dans le domaine crypté (106) en utilisant un protocole itératif sécurisé sur la base de protocoles assurant la confidentialité basés sur du calcule homomorphe (108) et du partage de secret (110), ledit protocole itératif sécurisé étant implémenté comme un procédé itératif stationnaire et étant essentiellement équivalent à une matrice d'actualisation jacobienne itérative ;
dans lequel ledit protocole itératif sécurisé comprend calculer les parts d'une diagonale d'une matrice de système (400 - 406), calculer une matrice modifiée cryptée et un vecteur modifié crypté (408), calculer un vecteur de sortie crypté (414 - 416) sur la base de calcul homomorphe (108) et de partage de secrets (110), et décrypter les éléments dudit vecteur de sortie (422) ;
dans lequel ledit procédé cryptographique est capable d'effectuer des calculs sécurisés, du traitement de signaux, et de l'analyse de données directement sur des données cryptées dans des environnements non fiables sans avoir à décrypter lesdites données cryptées (100).

**3.** Le produit de programme informatique selon la revendication 2, incorporé dans un support de stockage.

**4.** Le produit de programme informatique selon la revendication 2, porté dans un signal pour transmission.

FIG.1

FIG.2

SECURE DIRECT METHOD

K=0

K=K+1

*300* A RANDOMIZES THE ENCRYPTION OF C(K)

*302* A SENDS RANDOMIZED ENCRYPTION OF C(K) TO B

*304* B CALCULATES PRODUCTS D(K) AND E(K)

*306* B SENDS ENCRYPTED D(K) AND E(K) TO A

*308* A CALCULATES G(K) AND C(K+1)

NO ◇ K=L-1 ? YES

*310* A SENDS ENCRYPTED SCALING VECTOR TO B

*312* B DECRYPTS SCALING VECTOR AND X'(L)

*314* B SENDS SCALING VECTOR AND X'(L) TO A

*316* A CALCULATES ENCRYPTED X'(K)

*318* A SENDS ENCRYPTED X'(K) TO B

*320* B DECRYPTS X'(K)

*322* B SENDS X'(K) TO A

K=K-1

◇ K=0 ? NO

YES

*324* A AND B OBTAIN X

FIG.3

20

FIG.4

SECURE MATRIX INVERSION METHOD

500 — A AND B AGREE ON AN INITIAL MATRIX X(0)

502 — A CALCULATES X(1) HOMOMORPHICALLY

K=1

504 — A AND B SECURELY CALCULATE THE ENCRYPTED PRODUCT Q(K)

506 — A AND B SECURELY CALCULATE THE NEXT ENCRYPTED X(K+1)

K=K+1

508 — STOPPING CONDITION

NO

510 — YES

A SENDS ENCRYPTED X(K) TO B

512 — A AND B OBTAIN X

FIG.5